# EUROPEAN PATENT SPECIFICATION

(11) **EP 0 993 662 B1**
(45) Date of publication and mention of the grant of the patent: **11.05.2005**
(21) Application number: 98925685.4
(22) Date of filing: 16.06.1998
(51) Int. Cl.: G07F 7/08, H04Q 7/22

(54) **PROCEDURE FOR THE CONTROL OF APPLICATIONS STORED IN A SUBSCRIBER IDENTITY MODULE**
VERFAHREN ZUR KONTROLLE VON ANWENDUNGEN GESPEICHERT IN EINEM TEILNEHMERERKENNUNGSMODUL
PROCEDURE DE COMMANDE D'APPLICATIONS STOCKEES DANS UN MODULE D'IDENTIFICATION D'ABONNE

(30) Priority: 02.07.1997 FI 972840
(43) Date of publication of application: 19.04.2000
(73) Proprietor: TeliaSonera Finland Oyj, 00510 Helsinki (FI)
(72) Inventor: VATANEN, Harri, FIN-00510 Helsinki (FI)
(74) Representative: Simmelvuo, Markku Kalevi
(86) International application number: PCT/FI1998/000522
(87) International publication number: WO 1999/001848

(56) References cited:
- EP-A- 0 644 513
- EP-A- 0 748 135
- WO-A-96/32700

## Description

The present invention relates to a procedure as defined in the preamble of claim 1 for verifying the rights relating to the control of keys to applications stored in a subscriber identity module and to the use of such applications.

With the development of mobile communication networks, especially GSM networks (GSM, Global System for Mobile Communications), the services offered through them develop as well. Especially in applications making use of mobile communication networks and requiring a high level of data security, e.g. in payments for services, ordering, order confirmations, payment orders, bank services, etc., problems are encountered regarding safe application-specific control of keys and billing of license fees for operator-independent services. The problem is accentuated by the fact that subscriber identity modules used in GSM terminals are manufactured by several enterprises and that there are many companies offering applications and several operators delivering subscriber identity modules to customers. In addition, the applications used to provide services in the GSM network are often produced by outside software suppliers or equivalent, which means that the licenses for the applications belong to the software suppliers.

If a license fee is to be charged for the use of an application, it is necessary to carefully follow the use of the application and define the limits within which the application may be used. For this purpose no solution has been presented before, at least no solution that allows centralised control of the subscriber identity modules and the passwords relating to the applications stored in them.

The object of the present invention is to eliminate the drawbacks described above.

A specific object of the present invention is to produce a new type of procedure which is applicable for the control of keys to applications making use of the subscriber identity module and for the control of license agreements concerning the use of such applications and which can be easily implemented in a centralised form independent of different suppliers.

A further object of the present invention is to produce a procedure with a high level of data security that allows flexible and reliable safeguarding of the interests of operator, module manufacturer, application developers and users of applications.

As for the features characteristic of the invention, reference is made to the claims.

In conjunction with the present procedure for the control of applications stored in a subscriber identity module, the data communication system preferably comprises a data communication network and a terminal device connected to the data communication network. Preferably the data communication network is a GSM network and the terminal device is a GSM telephone. The GSM telephone is preferably provided with a subscriber identity module containing an application stored in it, which utilises the data communication network and is used via the terminal device for bank or other services available. The data communication system also comprises an application control server (1) connected to the data communication network. The application control server is preferably a computer or equivalent which is provided with means for setting up a connection to the data communication network and with software for implementing the required applications. The software is preferably managed by service providers or especially by data communication suppliers providing management services.

According to the invention, a key list comprising one or more subscriber and application-specific keys is stored in the subscriber identity module. The key list is preferably linked or connected with the subscriber identity module by using a unique identifier corresponding to the module. A corresponding list is also stored in the application control server, and the application stored in the subscriber identity module is activated and/or closed using the key list.

Thus, in the procedure of the invention, stored on a smart card (SIM card) in the mobile station is a list of keys comprising the keys K(1), K(2), ..., K(n) and KA(1) and KA(2) needed for activating or closing different applications on the card. The SIM card or subscriber identity module preferably also contains modules for activating and closing the application. In conjunction with manufacture, the SIM card has been initialised with a security module in a known manner. The activating/closing module is used to ensure that the application, such as electronic signature utilising the smart card, can be activated/closed by the key control system if necessary. Thus, the procedure of the invention implements application-specific key control in addition to the previously known SIM card key control system.

The application-specific key control system knows the keys needed in an application or applications, and these keys need not be known to the mobile communication operator's key control system. The application-specific key control system of the invention can be separated from the operators' key control systems, thus making it possible to provide a service independent of data communication network and operator. The key control system responsible for the applications need not know the teleoperator's keys, which are used for user identification in basic mobile communication services in a manner known in itself. Key control for applications is implemented in a protected database, from which application-specific services utilising the SIM card and requiring a high level of data security can be activated and closed.

As compared with prior art, the invention has the advantage that the procedure allows local identification of the user of services requiring a high level of data security by all service providers in the networks of different operators as well as a centralised implementation of key control.

Moreover, the procedure of the invention allows control and billing of user-specific payments and licenses for different applications.

In an embodiment of the invention, the validity of the user's right of access to the application stored in the subscriber identity module is verified periodically. If it is established that the access right has expired, then, using an appropriate key, the application in the subscriber identity module can be closed.

In conjunction with the activation of the application stored in the subscriber identity module, the subscriber identity module is sent a message concerning the opening of the application, said message containing the application key k(n) to be used in the application. In the application control server, the application key is attached to the unique identifier corresponding to the subscriber identity module. Based on the key list, the right of access to the application is preferably verified in the application control server and, if a valid access right exists, the special data needed in the application, e.g. service description and application-specific user interface codes, are sent.

In an embodiment of the present invention, all messages between the application control server and the terminal device are encrypted regardless of the content of the message.

In the following, the invention will be described by the aid of embodiment examples by referring to the attached drawing, in which
Fig. 1 presents a preferred data communication system in which the procedure of the invention can be used; and
Fig. 2 presents a block diagram of a preferred embodiment of the procedure of the invention.

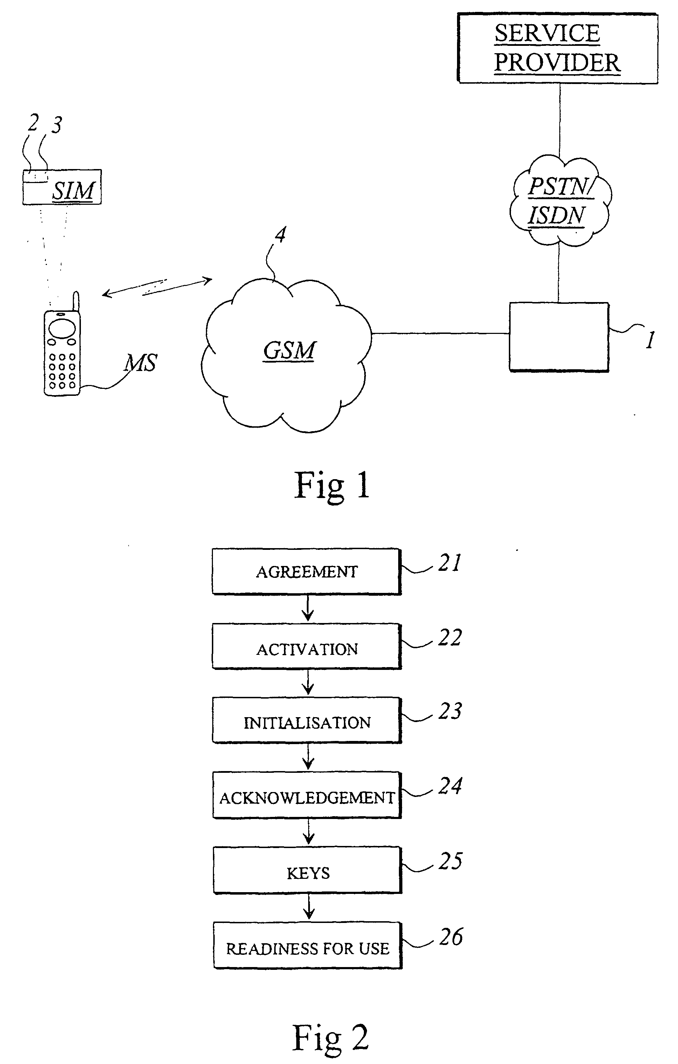

Fig. 1 presents an example of a data communication system in which the procedure of the invention can be implemented. The data communication system shown in Fig. 1 comprises a GSM telephone network 4. Connected to the GSM network is a mobile station MS compatible with the network and provided with a subscriber identity module SIM. In conjunction with manufacture, the subscriber identity module SIM has been initialised using a security module in a manner known in itself; reference is made to patent specification WO 90/11849. Moreover, the subscriber identity module comprises an activating and closing module 2, 3, which are used for the activation and closing of the application.

The service provider's application control server 1 is connected to the GSM network and to the service provider's equipment e.g. via a telephone network PSTN/ISDN. The connection between the application control server 1 and the GSM telephone MS is set up in accordance with the normal GSM practice either as a voice, data or short message connection. Let it be further stated that the telephone network 4 may be any other data communication network, such as a CDMA network, PCN network, UMTS network or equivalent, and that, correspondingly, the terminal device may be any other terminal device compatible with the data communication network to which a subscriber identity module or an equivalent device can be connected.

Fig. 2 presents a block diagram illustrating the various stages of control of an application in the subscriber identity module, carried out by the application control server. The example used here is a bank application in which a bank gives its customer the right to use its bank services using a GSM telephone MS and an application stored in a subscriber identity module SIM connected to it.

The customer is in possession of an identifier (UID) corresponding to the SIM card. The key k(n) corresponding to the identifier (UID) and the application (n) as well as the keys KA1 and KA2 have been stored in an application-specific key control system in the application control server 1. The customer makes an agreement with the bank about the use of a mobile station based bank service, whereupon the bank sends the UID corresponding to the customer's SIM card to an application-specific card control system. After this, the application-specific card control system sends an opening message to the SIM card corresponding to the UID. The opening message contains the customer's user key k(n) which is needed for the bank service and which is to be used later to activate the application stored on the card, and a possible registering message. Using the key k(n) sent by the card control system, the customer can set the mobile station to bank mode and send and acknowledgement of the registering message to the card control system. The key k(n) can also be sent in an encrypted form, which is decrypted by a decryption programme on the SIM card. The customer now has a licensed key that gives him/her the right to use the bank service concerned. The key is useless to outsiders because it is card-specific and will only activate an application stored on the particular card.

In conjunction with the activation of the card, the customer may be billed for the license fees if the customer acknowledges the registration. The application-specific card control system sends to the bank the necessary identifiers, including the identifier KA(1) needed for the activation of a bank service. In the bank, the customer and application specific identifier sent by the card control system is associated with the respective bank service. Using the application-specific activation code KA(1), the bank can load the service menus and forms needed in the bank service as well as the identifiers needed in the use of the service onto the customer's card, whereupon the bank service is available to the customer. The bank-specific service menus and service forms are transmitted to the mobile station by the "dynamic menu load" method or to the SIM card by the OTA (Over The Air) method in a manner known in itself. If the code KA(1) is correct, the activating/closing module on the card will accept the loading and the card will be activated for the bank service.

Finally, the process described above will be presented in greater detail by referring to the block diagram in Fig. 2. At a bank, the customer makes an agreement about utilising a mobile station MS and linking it to a bank service, block 21. At the same time, the unique identifier (UID) of the customer's subscriber identity module is linked to the service as described above. In the agreement, the customer accepts the license conditions required for the use of the application. Via the application control server 1, the bank sends the unique identifier (UID) of the subscriber identity module for the activation of the application in the subscriber identity module to the application-specific subscriber identity module control system, block 22. The subscriber identity module control system initialises the subscriber identity module SIM by sending a registering confirmation to the customer's mobile station, block 23. At the same time, the customer receives a key k(n) that the customer can use to switch his/her mobile station and the associated subscriber identity module into bank mode and subsequently to open the service.

In block 24, the customer enters the key k(n) into the mobile station and accepts the registration by acknowledging the registering message sent by the subscriber identity module control system. After this, the subscriber identity module control system sends the keys needed for the use of the application to the bank so that the application-specific menus and customer identifiers can be loaded into the customer's mobile station and subscriber identity module, block 25. The customer's mobile station has now been opened and activated and is ready for use in the bank service, block 26. If the customer misuses the system or otherwise fails to observe the terms of agreement, then the subscriber identity module control system can close the application in the subscriber identity module. The application is closed using a closing message containing a closing key.

If the customer fails to make the payments to be subsequently charged for the use of the application, e.g. the annual license fee to be paid for the service, use of the application can be prevented by sending the subscriber identity module SIM a closing message from the key control system. The encrypted closing message contains a closing key by which the application in the subscriber identity module will recognise that the sender of the message has the right to close the application stored on the card. Similarly, if the mobile station together with the subscriber identity module is lost, the card or application can be closed. The application can be opened and activated again in a corresponding manner from the application-specific key control system.

The invention is not restricted to the examples of its embodiments described above, but many variations are possible within the scope of the inventive idea defined by the claims.

## Claims

1. Procedure for the control of applications stored in a subscriber identity module in a data communication system comprising a data communication network (4), a terminal device (MS) connected to the data communication network, a subscriber identity module (SIM) connected to the terminal device and containing a stored application that makes use of the data communication network and is used by means of the terminal device, and an application control server (1) connected to the data communication network, **characterised in that**
a key list comprising one or more subscriber and application-specific keys is stored in the subscriber identity module (SIM);
a key list corresponding to the key list stored in the subscriber identity module is stored in the application control server; and
the application stored in the subscriber identity module is activated and/or closed using the key list.

2. Procedure as defined in claim 1, **characterised in that** a module (2, 3) for activating and/or closing the application is stored in the subscriber identity module (SIM).

3. Procedure as defined in claim 1 or 2, **characterised in that** a check is carried out periodically to determine whether a valid right of access to the application stored in the subscriber identity module exists.

4. Procedure as defined in any one of the preceding claims 1 - 3, **characterised in that**, in the application control server, the key list is linked to the subscriber identity module by using a unique identifier corresponding to it.

5. Procedure as defined in any one of the preceding claims 1 - 4, **characterised in that**, by means of the application control server (1),
a message concerning the opening of the application and containing an application key k(n) to be used in the application is sent to the subscriber identity module; and
the application key is attached to the unique identifier corresponding to the subscriber identity module.

6. Procedure as defined in any one of the preceding claims 1 - 5, **characterised in that**, via the application control server (1),
the right of access to the application is verified on the basis of the key list; and
the special data needed in the application are sent if a valid access right exists.

7. Procedure as defined in any one of the preceding claims 1 - 6, **characterised in that** the messages between the application control server (1) and the terminal device (MS) are encrypted.

8. Procedure as defined in any one of the preceding claims 1 - 7, **characterised in that** a telecommunication connection is set up between the terminal device (MS) and the subscriber identity module (SIM) connected to it on the one hand and the application control server (1) on the other hand via a telephone network, such as a mobile communication network.

9. Procedure as defined in any one of the preceding claims 1 - 9, **characterised in that** the data communication network (4) is a GSM network and the terminal device (MS) is a GSM telephone.

## Patentansprüche

1. Verfahren zur Kontrolle von Anwendungen, welche in einem Teilnehmeridentitäts- bzw. -erkennungsmodul in einem Datenkommunikationssystem gespeichert sind, welches aufweist: ein Datenkommunikationsnetzwerk (4), eine Endgerätevorrichtung (MS), welche mit dem Datenkommunikationsnetzwerk verbunden ist, ein Teilnehmererkennungsmodul (SIM), welches mit der Endgerätevorrichtung verbunden ist und welches eine gespeicherte Anwendung enthält, welche das Datenkommunikationsnetzwerk benutzt und welche mit Hilfe der Endgerätevorrichtung benutzt wird, und einen Anwendungssteuerserver (1), welcher mit dem Datenkommunikationsnetzwerk verbunden ist, **dadurch gekennzeichnet, dass** eine Schlüsselliste, welche einen oder mehrere teilnehmerspezifische und anwendungsspezifische Schlüssel enthält, in dem Teilnehmererkennungsmodul (SIM) gespeichert wird; eine Schlüsselliste, welche der Schlüsselliste entspricht, welche in dem Teilnehmererkennungsmodul gespeichert ist,
in dem Anwendungssteuerserver gespeichert wird; und
die Anwendung, welche in dem Teilnehmererkennungsmodul gespeichert ist, aktiviert wird und/oder geschlossen wird,
wobei die Schlüsselliste benutzt wird.

2. Verfahren nach Anspruch 1, **dadurch gekennzeichnet, dass** ein Modul (2, 3) zum Aktivieren und/oder zum Schließen der Anwendung in dem Teilnehmererkennungsmodul (SIM) gespeichert wird.

3. Verfahren nach Anspruch 1 oder 2, **dadurch gekennzeichnet, dass** eine Überprüfung periodisch ausgeführt wird, um zu bestimmen, ob ein gültiges Zugriffsrecht auf die Anwendung, welche in dem Teilnehmererkennungsmodul gespeichert ist, vorhanden ist.

4. Verfahren nach einem der vorausgehenden Ansprüche 1 bis 3, **dadurch gekennzeichnet, dass** in dem Anwendungssteuerserver die Schlüsselliste mit dem Teilnehmererkennungsmodul verbunden ist, indem eine einzigartige Kennung, die diesem entspricht, benutzt wird.

5. Verfahren nach einem der vorausgehenden Ansprüche 1 bis 4, **dadurch gekennzeichnet, dass** mit Hilfe des Anwendungssteuerservers (1)
eine Nachricht, welche das Öffnen der Anwendung betrifft und welche einen Anwendungsschlüssel k(n) enthält, welcher in der Anwendung zu nutzen ist, an den Teilnehmererkennungsmodul gesendet wird; und
der Anwendungsschlüssel an die einzigartige Kennung entsprechend dem Teilnehmererkennungsmodul angefügt wird.

6. Verfahren nach einem der vorausgehenden Ansprüche 1 bis 5, **dadurch gekennzeichnet, dass** über den Anwendungssteuerserver (1)
das Zugriffsrecht auf die Anwendung aufgrund der Schlüsselliste verifiziert wird; und
spezielle Daten, welche in der Anwendung benötigt werden, gesendet werden, wenn ein gültiges Zugriffsrecht vorhanden ist.

7. Verfahren nach einem der vorausgehenden Ansprüche 1 bis 6, **dadurch gekennzeichnet, dass** die Nachrichten zwischen dem Anwendungssteuerserver (1) und der Endgerätevorrichtung (MS) verschlüsselt werden.

8. Verfahren nach einem der vorausgehenden Ansprüche 1 bis 7, **dadurch gekennzeichnet, dass** eine Telekommunikationsverbindung zwischen der Endgerätevorrichtung (MS) und dem Teilnehmererkennungsmodul (SIM), welcher mit ihr auf der einen Seite und mit dem Anwendungssteuerserver (1) auf der anderen Seite über ein Telefonnetzwerk, wie z.B. ein mobiles Kommunikationsnetzwerk, verbunden ist, erstellt wird.

9. Verfahren nach einem der vorausgehenden Ansprüche 1 bis 9, **dadurch gekennzeichnet, dass** das Datenkommunikationsnetzwerk (4) ein GSM-Netzwerk ist und die Endgerätevorrichtung (MS) ein GSM-Telefon ist.

## Revendications

1. Procédure de commande d'applications stockées dans un module d'identification d'abonné dans un système de communication de données comprenant un réseau de communication de données (4), un dispositif formant terminal (MS) connecté au réseau de communication de données, un module d'identification d'abonné (SIM) connecté au dispositif formant terminal et contenant une application enregistrée qui fait usage du réseau de communication de données et dont il est fait usage au moyen du dispositif formant terminal, et un serveur de commande d'application (1) connecté au réseau de communication de données, la procédure étant **caractérisée en ce que** une liste de clés comprenant un ou plusieurs abonnés et clés spécifiques à l'application est enregistrée dans le module d'identification d'abonné (SIM) ;
une liste de clés correspondant à la liste de clés enregistrée dans le module d'identification d'abonné est enregistrée dans le serveur de commande d'application ; et
l'application enregistrée dans le module d'identification d'abonné est activée et/ou désactivée en utilisant la liste de clés.

2. Procédure selon la revendication 1, **caractérisée en ce qu'**un module (2, 3) permettant d'activer et/ou de désactiver l'application est enregistré dans le module d'identification d'abonné (SIM).

3. Procédure selon la revendication 1 ou 2, **caractérisée en ce qu'**un contrôle est réalisé périodiquement afin de déterminer s'il existe, ou non, un droit d'accès valide à l'application enregistrée dans le module d'identification d'abonné.

4. Procédure selon l'une quelconque des revendications précédentes 1 à 3, **caractérisée en ce que**, dans le serveur de commande d'application, la liste de clés est liée au module d'identification d'abonné par l'utilisation d'un identifiant unique correspondant à celui-ci.

5. Procédure selon l'une quelconque des revendications précédentes 1 à 4, **caractérisée en ce que**, au moyen du serveur de commande d'application (1), un message concernant l'ouverture de l'application et contenant une clé d'application k(n) qui doit être utilisée dans l'application, est envoyé vers le module d'identification d'abonné ; et
la clé de l'application est liée à l'identifiant unique qui correspond au module d'identification d'abonné.

6. Procédure selon l'une quelconque des revendications précédentes 1 à 5, **caractérisée en ce que**, par le biais du serveur de commande d'application (1),
le droit d'accès à l'application est vérifié sur la base de la liste de clés ; et
les données spéciales requises dans l'application sont envoyées si un droit d'accès valide existe.

7. Procédure selon l'une quelconque des revendications précédentes 1 à 6, **caractérisée en ce que** les messages entre le serveur de commande d'application (1) et le dispositif formant terminal (MS) sont chiffrés.

8. Procédure selon l'une quelconque des revendications précédentes 1 à 7, **caractérisée en ce qu'**une connexion de télécommunication est établie entre le dispositif formant terminal (MS) et le module d'identification d'abonné (SIM) qui est connecté à celui-ci d'une part, et le serveur de commande d'application (1) d'autre part, par le biais d'un réseau téléphonique, comme un réseau de télécommunication mobile par exemple.

9. Procédure selon l'une quelconque des revendications précédentes 1 à 8, **caractérisée en ce que** le réseau de communication de données (4) est un réseau GSM et que le dispositif formant terminal (MS) est un téléphone GSM.
